# EUROPÄISCHE PATENTSCHRIFT

(11) **EP 1 559 627 B1**
(45) Veröffentlichungstag und Bekanntmachung des Hinweises auf die Patenterteilung: **31.10.2007**
(21) Anmeldenummer: 05001346.5
(22) Anmeldetag: 24.01.2005
(51) Int. Cl.: B62D 1/10, B62D 1/11

(54) **Fahrzeuglenkrad**
Vehicle steering wheel
Volant de véhicule

(30) Priorität: 28.01.2004 DE 202004001255 U
(43) Veröffentlichungstag der Anmeldung: 03.08.2005
(73) Patentinhaber: TRW Automotive Safety Systems GmbH, 63743 Aschaffenburg (DE)
(72) Erfinder: Eck, Gregor, 63931 Kirchzell (DE); Kayser, Jens, 63863 Eschau (DE)
(74) Vertreter: Kitzhofer, Thomas

(56) Entgegenhaltungen:
- EP-A- 1 228 940
- DE-A1- 2 530 594
- DE-A1- 3 426 684
- PATENT ABSTRACTS OF JAPAN Bd. 1995, Nr. 01, 28. Februar 1995 (1995-02-28) -& JP 06 285607 A (TOYODA GOSEI CO LTD), 11. Oktober 1994 (1994-10-11)

## Beschreibung

Die Erfindung betrifft ein Fahrzeuglenkrad, mit einem einen Nabenabschnitt aufweisenden Lenkradskelett, das durch eine zentrale Durchstecköffnung herum eine Buchse aufweist, ein mit der Buchse verbundenes, separates Armierungsblech, das in einem Druckgußabschnitt des Lenkradskeletts eingebettet ist.

Derartige Lenkradskelette werden anschließend üblicherweise umschäumt, so daß das Skelett nicht sichtbar ist. Das Skelett muß hohe Kräfte beim Auftreffen des Insassen während eines Unfalls aufnehmen. Um die Aufprallintensität beim Aufprall zu verringern, muß sich das Skelett plastisch verformen. Auf der anderen Seite darf es natürlich nicht zu weich sein. Insbesondere darf es nicht brechen. In diesem Zusammenhang gibt es den sogenannten Nabendurchschlagversuch. Bei diesem sollten die im Druckgußmaterial eingebetteten Buchsen nicht aus dem Druckgußmaterial herausgetrieben werden.

Die EP 1 228 940 A1 zeigt ein Fahrzeuglenkrad mit einem Skelett aus Druckgußmaterial, bei dem in das Druckgußmaterial eine Armierung eingebettet ist.

Aus der DE 34 26 684 A1 ist ein Lenkrad mit Stoßdämpfung bekannt, das ein Lenkrohr und eine am Lenkrohr befestigte Verstärkung aufweist. Die Verstärkung hat einen Abschnitt mit verringertem Durchmesser, der in die zentrale Öffnung einer ringförmigen, sich selbstzentrierenden Scheibe eingreift. Die Scheibe ist an der Verstärkung angeschweißt. An ihrem Außenumfang ist die ringförmige Verstärkungsscheibe mit einer Speiche verbunden.

Aufgabe der Erfindung ist es, ein Lenkrad mit einem Lenkradskelett zu schaffen, welches bei einem Unfall plastisch deformiert wird und dennoch eine hohe Stabilität gerade beim Nabendurchschlagversuch zeigt.

Diese Aufgabe wird erfindungsgemäß bei einem oben genannten Lenkrad dadurch gelöst, daß die Buchse eine radial nach außen weisende Nut besitzt, in die der Rand einer Ausnehmung im Armierungsblech ragt und daß das

Armierungsblech an der Buchse durch eine Fügeverbindung durch Stoffvereinigung angebracht ist. Eine Fügeverbindung durch Stoffvereinigung ist Schweißen, Löten oder Kleben, wobei die ersten beiden Verbindungsarten bei der Erfindung bevorzugt werden. Das in den Druckgußabschnitt eingebettete Armierungsblech oder die Armierungsbleche binden die Buchse einerseits besser in das Druckgußmaterial ein, andererseits wird der gesamte Nabenabschnitt stabiler. Das Armierungsblech kann sich bei hoher Belastung plastisch verformen und einen Großteil der eingebrachten Energie aufnehmen. Die in axialer Richtung doppelte Verbindung zwischen der Buchse und dem Armierungsblech (einerseits der Formschluß über die Nut, andererseits die Stoffvereinigung) verhindern sicher ein Lösen des Armierungsblechs von der Buchse.

Eine noch bessere Einbindung des Armierungsblechs in das Druckgußmaterial kann erreicht werden, indem das Armierungsblech mit Öffnungen versehen ist, durch die Druckgußmaterial hindurch tritt.

Das Armierungsblech liegt bevorzugt nur im Nabenabschnitt, das heißt, es erstreckt sich nicht in den Bereich der Speichen. Hierzu können andere Blecheinleger oder dergleichen vorgesehen sein.

Gemäß der bevorzugten Ausführungsform sind mehrere seitlich von der Buchse nach außen weisende Armierungsbleche vorgesehen, deren radial innere Enden an der Buchse befestigt sind. Diese Ausführungsform soll eine leichtere Einbindung der Armierungsbleche in die Nut der Buchse ermöglichen.

In diesem Zusammenhang ist es vorteilhaft, wenn das radial innere Ende jedes Armierungsblechs eine halbkreisförmige Ausnehmung besitzt, mit der das Ende seitlich in die Nut ragt. Der Rand der Ausnehmung kann mittels einer Preßpassung in der Nut gehalten sein, vorzugsweise auf jeden Fall ohne erwähnenswertes axiales Spiel, bevor die beiden Teile miteinander verlötet oder verschweißt werden.

Die Einbindung der Buchse in das Druckgußmaterial kann noch verbessert werden, indem die Buchse radial außenseitig wenigstens eine Ausnehmung besitzt, in die Druckgußmaterial eindringt und sie ausfüllt. Dies erhöht die Kraft, die zum Austreiben der Buchse aus dem Druckgußmaterial notwendig ist.

Diese Ausnehmung, die einen in axialer Richtung wirkenden Formschluß zwischen Druckgußmaterial und Buchse sicherstellen soll, ist gemäß der bevorzugten Ausführungsform eine Ringnut.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines Skeletts des erfindungsgemäßen Fahrzeuglenkrads,
- Figur 2 eine Schnittansicht durch das Lenkradskelett nach Figur 1 im Bereich der Nabe und
- Figur 3 eine Draufsicht eines der beiden bei der Erfindung eingesetzten Armierungsbleche.

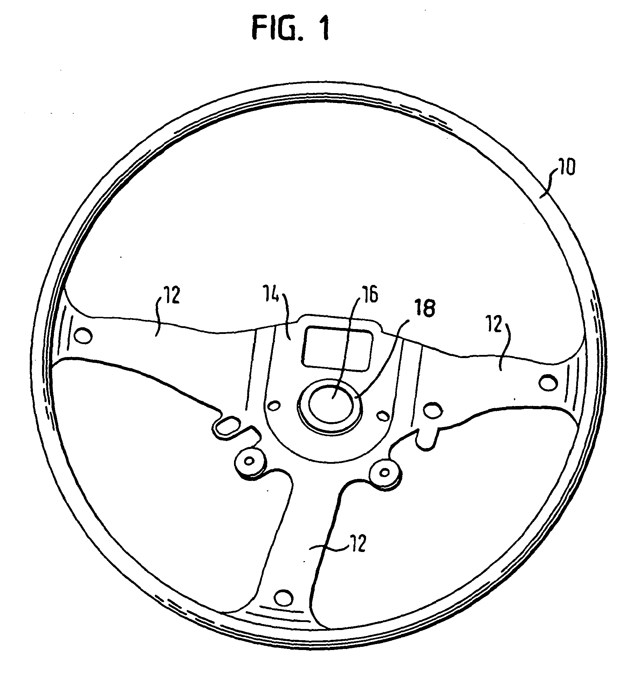

In Figur 1 ist ein Fahrzeuglenkrad, genauer gesagt sein Skelett dargestellt, das verschiedene Abschnitte hat, nämlich einen Lenkradkranz 10, Speichen 12, und einen Nabenabschnitt 14, von dem die Speichen 12 ausgehen. Der Nabenabschnitt 14 hat eine zentrale Durchstecköffnung 16 zur späteren Aufnahme einer Lenkwelle. Das Skelett besteht großteils aus Aluminium- oder Magnesiumdruckgrußmaterial, es besitzt jedoch darüber hinaus einige weitere Teile, die das Druckgußmaterial verstärken.

Im Nabenabschnitt 14 ist hierzu eine Buchse 18 vorgesehen, die die zentrale Durchstecköffnung 16 seitlich begrenzt.

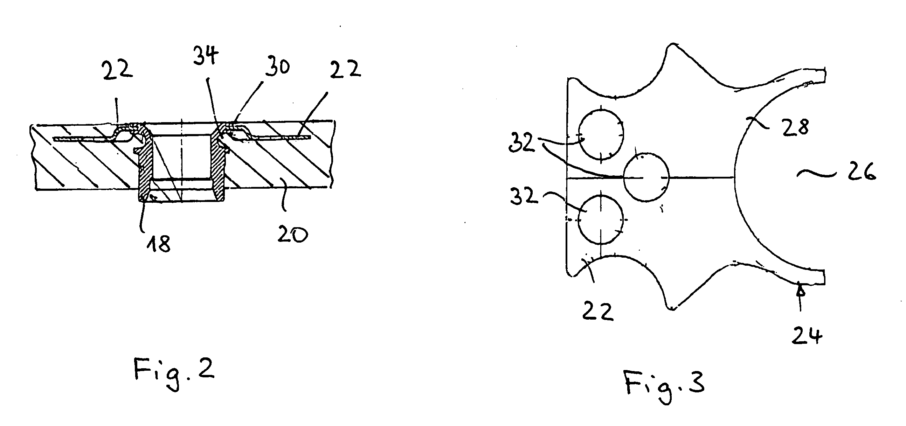

Mit der Buchse 18 aus Metall sind zwei bezüglich der Durchstecköffnung 16 diametral gegenüberliegende Armierungsbleche mit der Buchse 18 verbunden und darüber hinaus in dem Druckgußabschnitt 20 des Skeletts eingebettet, wie Figur 2 zeigt. Die Armierungsbleche tragen das Bezugszeichen 22. Eines der Armierungsbleche 22 ist in Figur 3 zu sehen, wobei das zweite Armierungsblech nur spiegelbildlich hierzu ausgeführt ist. Die Armierungsbleche haben ein radial inneres Ende 24 mit einer halbkreisförmigen Ausnehmung 26 und einem die Ausnehmung 26 begrenzenden Rand 28, der radial einwärts in eine Umfangsnut 30 in der Buchse 18 gesteckt wird. Die axiale Höhe der Nut 30 entspricht im Wesentlichen der Dicke des Armierungsblechs 22 im Bereich des Randes 28.

Jedes Armierungsblech 22 ist darüber hinaus mit der Buchse 18 im Bereich des Randes 28 und der Nut 30 durch Schweißen oder Löten, allgemeiner durch eine stoffvereinigende Fügeverbindung verbunden.

Im Bereich des radial äußeren Endes sind in jedem Armierungsblech 22 mehrere Öffnungen 32 vorgesehen, durch die sich Druckgußmaterial erstreckt.

Das Druckgußmaterial des Druckgußabschnitts 20 erstreckt sich auch in eine tiefe Ringnut oder Ausnehmung 34, die knapp unterhalb der Armierungsbleche 22 auf dem Außenumfang der Buchse 18 vorgesehen ist.

Die Armierungsbleche 22 stabilisieren den Nabenabschnitt 14, ragen also nicht in die Speichenabschnitte 12.

Bei einem Aufprall des Insassen auf das Lenkrad im Bereich des Lenkradkranzes 10 wird über die Speichen 12 eine im Wesentlichen axiale Kraft in den Nabenabschnitt 14 eingebracht. Diese führt dazu, daß sich die Armierungsbleche 22 plastisch verformen. Die Nut 30, die in axialer Richtung als formschlüssige Aufnahme für die Armierungsbleche 22 dient, entlastet die Schweiß- oder Lötverbindung.

Alternativ könnte natürlich auch eine Klebeverbindung zwischen den Armierungsblechen 22 und der Buchse 18 vorgesehen sein.

Die Armierungsbleche 22 sind zwar mit der Buchse 18 verbunden, sie stellen jedoch vor der Verbindung zur Buchse 18 separate Teile dar.

## Patentansprüche

1. Fahrzeuglenkrad, mit
einem einen Nabenabschnitt (14) aufweisenden Lenkradskelett, das um eine zentrale Durchstecköffnung (16) herum eine Buchse (18) aufweist,
wenigstens ein mit der Buchse (18) verbundenes, separates Armierungsblech (22), das in einen Druckgußabschnitt (20) des Lenkradskeletts eingebettet ist,
**dadurch gekennzeichnet, daß**
die Buchse (18) eine radial nach außen weisende Nut (30) besitzt, in die der Rand (28) einer Ausnehmung (26) im Armierungsblech (22) ragt und
daß das Armierungsblech (22) an der Buchse (18) durch eine Fügeverbindung durch Stoffvereinigung angebracht ist.

2. Fahrzeuglenkrad nach Anspruch 1, **dadurch gekennzeichnet, daß** das Armierungsblech (22) mit Öffnungen (32) zum Durchtritt von Druckgußmaterial versehen ist.

3. Fahrzeuglenkrad, nach Anspruch 1 oder 2, **dadurch gekennzeichnet, daß** das Armierungsblech (22) nur im Nabenabschnitt (14) liegt.

4. Fahrzeuglenkrad, nach einem der vorhergehenden Ansprüche, **dadurch gekennzeichnet, daß** mehrere seitlich von der Buchse (18) nach außen weisende Armierungsbleche (22) vorgesehen sind, deren radial innere Enden (24) an der Buchse (18) befestigt sind.

5. Fahrzeuglenkrad, nach einem der vorhergehenden Ansprüche, **dadurch gekennzeichnet, daß** das radial innere Ende (24) jedes Armierungsblechs (22) eine halbkreisförmige Ausnehmung (26) besitzt, mit der das Ende (24) seitlich in die Nut (30) ragt.

6. Fahrzeuglenkrad, nach einem der vorhergehenden Ansprüche, **dadurch gekennzeichnet, daß** die Buchse (18) radial außenseitig wenigsten eine Ausnehmung (34) besitzt, in die Druckgußmaterial eindringt und sie im Wesentlichen ausfüllt.

7. Fahrzeuglenkrad, nach Anspruch 6, **dadurch gekennzeichnet, daß** die Ausnehmung (34) in der Buchse (18) eine Ringnut ist.

## Claims

1. A vehicle steering wheel, comprising
a steering wheel skeleton including a hub section (14) and having a bush (18) around a central passage opening (16),
at least one separate reinforcement plate (22) which is connected with the bush (18) and is embedded into a die cast section (20) of the steering wheel skeleton,
**characterized in that**
the bush (18) has a groove (30) directed radially outwards, into which the edge (28) of a recess (26) in the reinforcement plate (22) projects, and
the reinforcement plate (22) is mounted to the bush (18) by a joining connection by material combination.

2. The vehicle steering wheel according to claim 1, **characterized in that** the reinforcement plate (22) is provided with openings (32) for the passage of die cast material.

3. The vehicle steering wheel according to claim 1 or 2, **characterized in that** the reinforcement plate (22) is situated only in the hub section (14).

4. The vehicle steering wheel according to any of the preceding claims, **characterized in that** several reinforcement plates (22) are provided which are directed outwards laterally from the bush (18) and the radially inner ends (24) of which are fastened to the bush (18).

5. The vehicle steering wheel according to any of the preceding claims, **characterized in that** the radially inner end (24) of each reinforcement plate (22) has a semicircular recess (26) by which the end (24) projects laterally into the groove (30).

6. The vehicle steering wheel according to any of the preceding claims, **characterized in that** the bush (18) has radially externally at least one recess (34) into which die cast material penetrates and substantially fills it.

7. The vehicle steering wheel according to claim 6, **characterized in that** the recess (34) in the bush (18) is an annular groove.

## Revendications

1. Volant de direction de véhicule, comportant
un squelette de volant de direction présentant un tronçon de moyeu (14), lequel présente une douille (18) autour d'un orifice d'enfichage traversant (16) central,
au moins une tôle d'armature (22) séparée reliée à la douille (18), laquelle est noyée dans un tronçon moulé sous pression (20) du squelette de volant de direction,
**caractérisé en ce que**
la douille (18) possède une gorge (30) orientée radialement vers l'extérieur, dans laquelle fait saillie le borde (28) d'un évidement (26) dans la tôle d'armature (22), et
**en ce que** la tôle d'armature (22) est montée sur la douille (18) par une liaison d'assemblage par conjonction de matière.

2. Volant de direction de véhicule selon la revendication 1, **caractérisé en ce que** la tôle d'armature est pourvue d'ouvertures (32) pour le passage de matériau de coulée sous pression.

3. Volant de direction de véhicule selon la revendication 1 ou 2, **caractérisé en ce que** la tôle d'armature (22) n'est située que dans le tronçon de moyeu (14).

4. Volant de direction de véhicule selon l'une des revendications précédentes, **caractérisé en ce qu'**il est prévu plusieurs tôles d'armature (22) tournées vers l'extérieur latéralement à la douille (18), dont les extrémités radialement intérieures (24) sont fixées sur la douille (18).

5. Volant de direction de véhicule selon l'une des revendications précédentes, **caractérisé en ce que** l'extérieur radialement intérieure (24) de chaque tôle d'armature (22) possède un évidement (26) semi-circulaire par lequel l'extrémité (24) fait latéralement saillie dans la gorge (30).

6. Volant de direction de véhicule selon l'une des revendications précédentes, **caractérisé en ce que** la douille (18) possède radialement côté extérieur au moins un évidement (34) dans lequel pénètre du matériau de coulée sous pression qui le remplit sensiblement.

7. Volant de direction de véhicule selon la revendication 6, **caractérisé en ce que** l'évidement (34) dans la douille (18) est une gorge annulaire.
